## Europäisches Patentamt
## European Patent Office
## Office européen des brevets

(19)

(11) Veröffentlichungsnummer : **0 110 197 B1**

(12) **EUROPÄISCHE PATENTSCHRIFT**

(45) Veröffentlichungstag der Patentschrift :
06.07.88

(51) Int. Cl.⁴ : **B 60 K   5/12**

(21) Anmeldenummer : **83111071.3**

(22) Anmeldetag : **05.11.83**

(54) Zweikammer-Motorlager mit hydraulischer Dämpfung.

(30) Priorität : 30.11.82 DE 3244295

(43) Veröffentlichungstag der Anmeldung :
13.06.84 Patentblatt 84/24

(45) Bekanntmachung des Hinweises auf die Patenterteilung : 06.07.88 Patentblatt 88/27

(84) Benannte Vertragsstaaten :
DE FR GB IT SE

(56) Entgegenhaltungen :
EP-A- 0 014 742
EP-A- 0 042 909
EP-A- 0 044 545
EP-A- 0 053 401
DE-A- 2 618 333
GB-A- 2 033 534

(73) Patentinhaber : **METZELER Gesellschaft mit beschränkter Haftung**
**Gneisenaustrasse 15**
**D-8000 München 50 (DE)**

(72) Erfinder : **Hofmann, Manfred**
**Gerhard von Dietz-Strasse 15**
**D-6257 Hünfelden 1 (DE)**
Erfinder : **Sciortino, Giacomo**
**Rheinstrasse 50**
**D-5403 Mülheim-Kärlich 2 (DE)**

(74) Vertreter : **Michelis, Theodor, Dipl.-Ing.**
**Gneisenaustrasse 15**
**D-8000 München 50 (DE)**

EP 0 110 197 B1

## Beschreibung

Die Erfindung betrifft ein Zweikammer-Motorlager mit hydraulischer Dämpfung, insbesondere für Kraftfahrzeuge, dessen flüssigkeitsgefüllte und mit gummielastischen Umfangswänden versehene Kammern über eine, mit einer Drosselöffnung versehenen Zwischenplatte miteinander verbunden sind und in dessen motorseitiger Kammer durch eine, eine metallische Einlage aufweisende Gummimembran eine weitere luftgefüllte Membrankammer abgetrennt ist, wobei die Membrankammer nach innen gegen die motorseitige Flüssigkeitskammer durch eine koaxial zu der als eigentliche Tragfeder ausgebildeten Umfangswand liegenden Gummimembran und nach außen gegen eine Motorlagerplatte abgeschlossen ist.

Ein derartiges Motorlager ist aus der EP-A-0 014 742 bekannt. Dabei bildet die Membran die obere Stirnwand der motorseitigen Flüssigkeitskammer und liegt der als eigentliche Tragfeder des Lagers wirkenden Gummiwandung gegenüber. Ferner weist sie einen Querschnitt auf, der größer ist als der hydraulisch wirksame Kammerquerschnitt. Eine definierte Entkopplung hochfrequenter Schwingungen mit einer geringen Schwingungsamplitude von etwa 0,1 mm, wobei größere Ausschläge nicht zugelassen werden sollen, kann mit einer solchen Membran schon aus fertigungstechnischen und auch funktionsmäßigen Gründen nicht beherrscht werden, selbst wenn gesonderte Anschläge vorliegen. Demgegenüber liegt der Erfindung die Aufgabe zugrunde, ein Zweikammer-Motorlager mit hydraulischer Dämpfung zu schaffen, bei dem nicht nur eine hohe Dämpfung großer Schwingungsamplitude erfolgt, sondern bei dem auch eine optimale Isolierung sowohl des akustischen Verhaltens als auch der eingeleiteten Schwingungen bei kleinen Amplituden sicher gewährleistet wird.

Zur Lösung dieser Aufgabe ist ausgehend vom eingangs genannten Stand der Technik erfindungsgemäß vorgesehen, daß die Membrankammer zylindrisch ausgebildet und zentral in die Motorlagerplatte eingelassen ist und daß die Metalleinlage als kreisscheibenförmige Schwungmasse ausgebildet ist, die koaxial in die anschlagslos in der Motorlagerplatte gehalterten Gummimembran eingebettet ist.

Zweckmäßigerweise besteht dabei die Membran aus einem weichen Gummi mit einer Shore-A-Härte von 25 bis 45, insbesondere 30 bis 38. Dabei kann die Gummimembran insbesondere so ausgebildet sein, daß sie eine progressive Federkonstante aufweist.

Durch eine derartige Ausbildung und Anordnung einer Membran mit einer kreisscheibenförmigen Schwungmasse können auftretende Schwingungen auch kleiner Amplitude und höherer Frequenz sicher entkoppelt werden, wobei durch das Übersetzungsverhältnis von hydraulisch wirksamem Kammerquerschnitt und Querschnitt der Membran eine optimale Isolierung akustischer Schwingungen gewährleistet ist.

Anhand einer schematischen Zeichnung sind Aufbau und Wirkungsweise eines Ausführungsbeispiels nach der Erfindung näher erläutert.

Dabei zeigen:

Fig. 1 einen Querschnitt durch ein Zweikammer-Motorlager,

Fig. 2 das physikalische Modell eines derartigen Lagers,

Fig. 3 das hydraulische Ersatzbild des Lagers,

Fig. 4 u. 5 Diagramme für Dämpfung und Steifigkeit herkömmlicher, nicht entkoppelter Hydrolager und

Fig. 6 u. 7 Diagramme für Dämpfung und Steifigkeit erfindungsgemäßer entkoppelter Hydrolager.

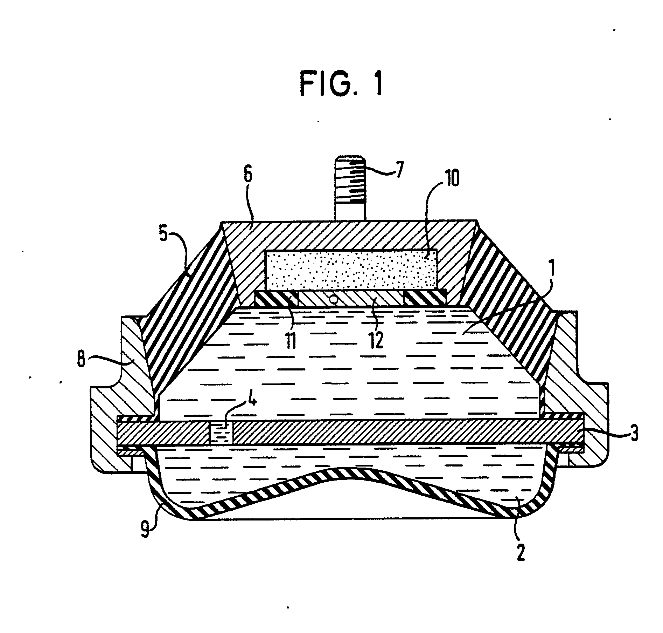

Wie aus Fig. 1 ersichtlich ist, die den schematischen Aufbau des erfindungsgemäßen Zweikammer-Motorlagers darstellt, besteht dieses Lager im wesentlichen aus einer oberen motorseitigen Kammer 1 und einer unteren Kammer 2, die mit einer hydraulischen Flüssigkeit gefüllt und durch eine Zwischenplatte 3 mit einer Drosselöffnung 4 voneinander getrennt sind. Die obere Kammer 1 wird dabei von einer starkwandigen, hohlkegelförmigen Kammerwandung 5 aus gummielastischem Material gebildet, die an der oberen Stirnseite von der Motorlagerplatte 6 mit einem aufgesetzten Gewindebolzen 7 abgeschlossen und am unteren Außenumfang mit dem ringförmigen Widerlager 8 haftend verbunden ist. Die untere Kammer 2 wird von einer beispielsweise tassenförmigen Kammerwandung 9 aus ebenfalls gummielastischem Material gebildet, die ebenfalls am Widerlager 8 abdichtend befestigt ist. Auch die Zwischenplatte 3 ist im Widerlager 8 starr gelagert.

Erfindungsgemäß ist nunmehr auf der Unterseite der Motorlagerplatte 6 ein zylindrischer Hohlraum 10 eingelassen, der zur oberen Kammer 1 durch eine kreisringförmige Gummimembran 11 mit einer zentralen Tilgermasse 12 abgeschlossen ist. Dabei ist nach dem dargestellten Ausführungsbeispiel die Tilgermasse 12 als metallische Kreisscheibe ausgebildet und von der kreisringförmig gestalteten Gummimembran 11 gehalten. Die Membran 11 besteht vorzugsweise aus einem weichen Gummi mit einer Shore-A-Härte von etwa 25 bis 45, wobei ein optimales Verhalten bei einer Shore-Härte von 30 bis 38 erreicht wird. Der im folgenden als Membrankammer bezeichnete Hohlraum 10 ist nach außen abgeschlossen und mit einem Gas oder einer Flüssigkeit geringer Dichte gefüllt. Der Druck in dieser Membrankammer 10 kann dabei dem Atmosphärendruck entsprechen oder aber für eine entsprechende Dämpfungsanpassung auch mit Überdruck beaufschlagt sein.

Zur Erläuterung der Funktion und Arbeitsweise dieses Motorlagers seien zunächst noch das physikalische Modell und das hydraulische Ersatzbild dargestellt.

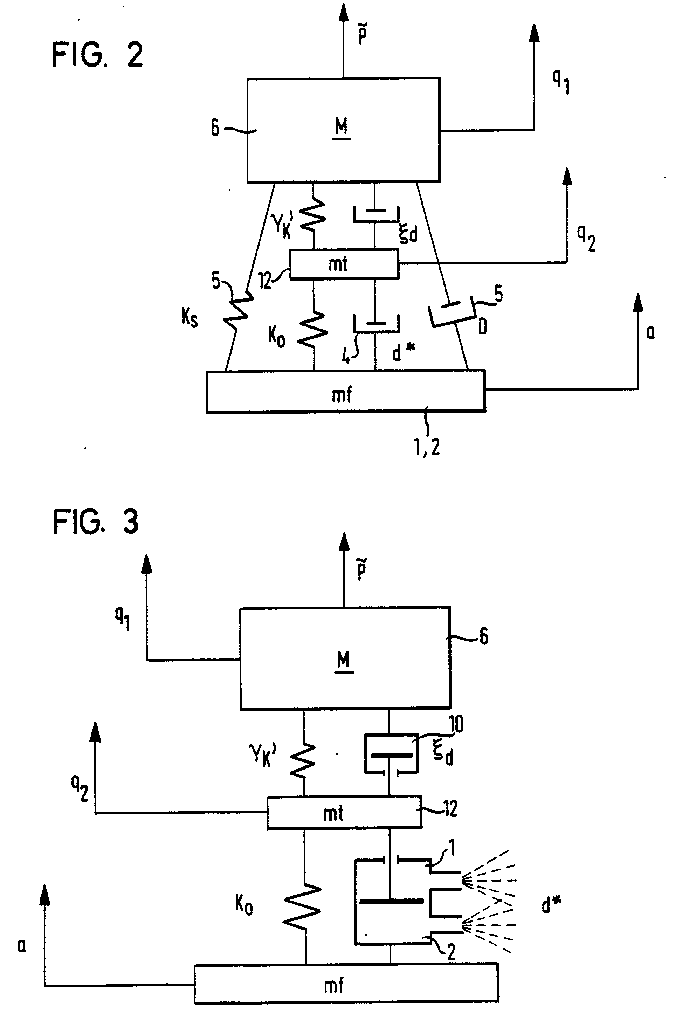

Nach dem physikalischen Modell entsprechend Fig. 2 ist die Motormasse M, die an der Motorlagerplatte 6 angreift und die Bewegung $q_1$ ausübt, mit der äquivalenten Masse $m_f$ der hydraulischen Flüssigkeit in den Kammern 1 und 2 zunächst über die gummielastische Kammerwandung 5 gekoppelt, die durch die statische Steifigkeit $K_s$ und die mechanische Dämpfung D charakterisiert ist. Parallel dazu ist zwischen die Motormasse M und die äquivalente Flüssigkeitsmasse $m_f$ die Masse $m_t$ des Tilgers 12 geschaltet, die abhängig von den nachstehend erläuterten Parametern die Bewegung bzw. Beschleunigung $q_2$ erfährt. Die Kopplung der Tilgermasse $m_t$ zur Motormasse M erfolgt dabei über das Federersatzbild K', das die komplexe Steifigkeit des Tilgersystems, d. h. die volumetrische Steifigkeit der Membrankammer 10 plus der Federkonstanten der elastischen Lagerung 11 der Tilgermasse 12 umfaßt, sowie der Dämpfungs-Kennfunktion d des Tilgersystems, die vom Dämpfungsgrad der elastischen Lagerung der Tilgermasse $m_t$ und dem Dämpfungsgrad der mit einem Gas oder einer Flüssigkeit gefüllten Hohlraumes 10 abhängig ist. Die Kopplung der Tilgermasse $m_t$ zur äquivalenten Masse $m_f$ der Flüssigkeit erfolgt über die Federkenngröße $K_o$, d. h. der volumetrischen Steifigkeit der oberen Kammer 1 sowie die Drossel 4 und deren Kennfunktion d*, wobei diese Kennfunktion von der geometrischen Gestaltung der Drossel, insbesondere deren Länge und deren Durchmesser sowie der Strömungsart der spezifischen Masse der Flüssigkeit, deren Massenträgheit und dem Verhältnis der volumetrischen Steifigkeit von oberer und unterer Kammer 1 und 2 abhängig ist. Wesentlich für Funktion und Wirkungsweise des Lagersystems ist dabei noch die Kenngröße $\gamma$, nämlich das Verhältnis der komplexen Steifigkeit K' des Tilgersystems und der Koppelfeder $K_o$, sowie die Kenngröße $\zeta$, die das Dämpfungs- oder Wirkungsgradverhältnis der Kennfunktion d der Tilgermasse $m_t$ und der Kennfunktion d* der Drossel angibt.

Im hydraulischen Ersatzbild nach Fig. 3 ist nochmals die Ankopplung der Tilgermasse $m_t$ an die Motormasse M und die äquivalente Masse $m_f$ der Flüssigkeit mit der Dämpfung d der Membrankammer 10 und der Drosseldämpfung d* zwischen oberer Kammer 1 und unterer Kammer 2 sowie der entsprechenden Koppelfedern K' und $K_o$ dargestellt.

Das Zweikammer-Motorlager nach der Erfindung bewirkt somit zunächst bei Einleitung von Motorschwingungen mit großer Amplitude geringer Frequenz eine hohe Dämpfung wegen des dabei erfolgenden Flüssigkeitsaustausches durch die Drossel 4. Bei kleinen Amplituden etwa in der Größenordnung von 0,1 mm hoher Frequenz erfolgt dagegen kein Flüssigkeitsaustausch, wodurch eine optimale Isolierung sowohl des akustischen Verhaltens als auch der eingeleiteten Schwingungen gewährleistet ist. Das erfindungsgemäße Lagersystem nutzt dabei die Nichtlinearität der hydraulischen Dämpfungskraft aus, die bestimmt ist durch die Beschleunigung der Flüssigkeit durch die Drossel sowie deren Wirkung auf die äquivalente Flüssigkeitsmasse.

Die Masse der Flüssigkeit erzeugt dabei eine dynamische Kraft, die von der Motorbewegung $q_1$ und der Motorbeschleunigung $\ddot{q}_1$ und die dadurch bedingte Beschleunigung der Flüssigkeit durch das Dämpfungssystem in Form der Drossel 4 erzeugt wird. Diese dynamische Kraft beaufschlagt als hydraulischer Druck die elastisch gelagerte Tilgermasse 12 bzw. das Tilgersystem aus Tilgermasse 12, Gummimembran 11 und gasgefüllter Membrankammer 10, die eine Auslenkung erfährt, wenn sie belastet wird und als Masse schwingt und auch wenn sie entsprechend entlastet wird. Die Sinus-Erregerfunktion stellt sich dabei dar als :

$$\varepsilon = \int Kd\ dq = \int Kd\ \ddot{q}\ dt$$

wobei $\varepsilon$ = Energie, erzeugt durch eine hydraulische Kraft Kd mittels einer Erregungsamplitude q in der oberen Kammer 1.

Wenn nun die elastisch gelagerte Tilgermasse 12 in Gegenphase zur Erregung, d. h. zur Flüssigkeitsmasse in den Kammern 1 und 2 schwingt, dann hat das Gesamtsystem den maximalen Wirkungsgrad erreicht und eine vollständige hydraulische Entkopplung bewirkt.

Durch eine gezielte Abstimmung und Auslegung dieses hydro-pneumatischen Systems kann dabei ein Tilgungseffekt auf einem wesentlich breiteren Frequenzbereich als mit herkömmlichen Systemen erreicht werden. Dies bedingt insbesondere ein erheblich verbessertes akustisches Verhalten.

Als Abstimmungsparameter für eine gezielte Wahl des gewünschten Entkopplungsfrequenzbereiches sind dabei besonders zu berücksichtigen die Masse des Tilgers 12, das Volumen der Membrankammer 10 und die Dichte des darin enthaltenen Gases oder der Flüssigkeit, die Biegesteifigkeit der elastischen Lagerung der Tilgermasse 12, die besonders durch eine Progressivität der Federkonstante der Gummimembran 11 zu erreichen ist, sowie durch das Verhältnis der Tilgersystemfläche zur wirkenden Fläche der oberen Kammer 1 und schließlich die Verhältnisse $\gamma$ und $\zeta$, die anhand des physikalischen Modells erläutert sind, und unter deren Berücksichtigung auch die Gummimembran 11 bei Verwendung eines Gummis mit einer Shore-A-Härte von 30 bis 38 ein optimales Verhalten zeigt.

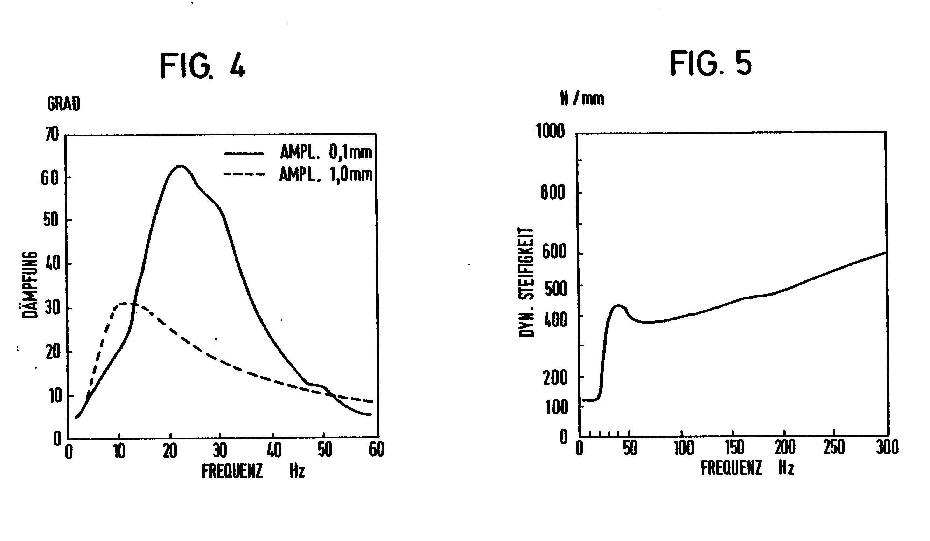

In den Diagrammen nach den Fig. 4 bis 7 sind Dämpfungsverhalten und die dynamische Steifigkeit über der Frequenz aufgetragen und für ein herkömmliches, nicht entkoppeltes Hydrolager und ein erfindungsgemäß entkoppeltes Hydrolager gegenübergestellt. Wie man dabei aus den Fig. 4 und 5 ersieht, in denen einmal die Dämpfung und einmal die dynamische Steifigkeit über der Frequenz für ein nicht entkoppeltes Hydrolager aufgetragen sind, ergibt sich daraus eine Erhöhung der Dämpfung bei Verringerung der Amplitude sowie ein Anstieg der dynamischen Steifigkeit, die dann annähernd konstant bleibt, obwohl ein entgegengesetztes Verhalten erwünscht wäre.

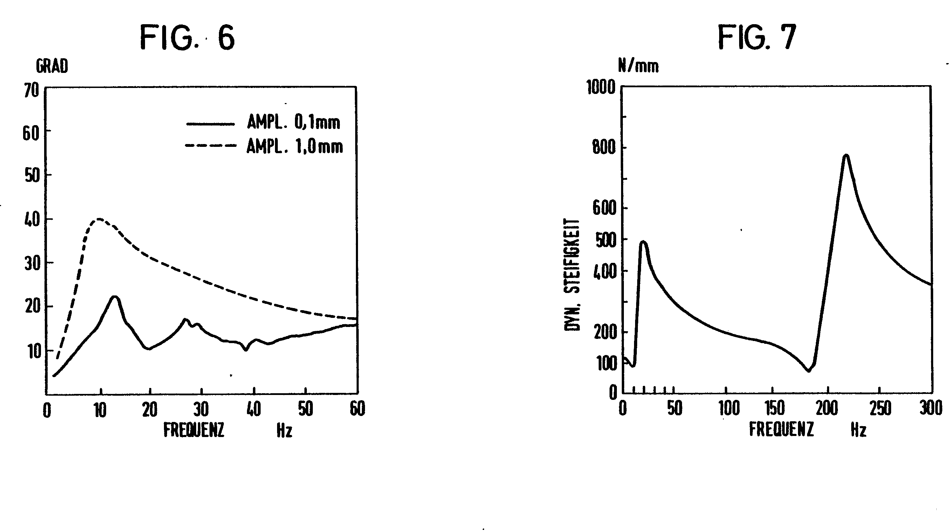

Demgegenüber zeigen die Fig. 6 und 7 den Verlauf der Dämpfung und der dynamischen Steifigkeit für ein entkoppeltes Hydrolager nach der Erfindung, woraus sich ergibt, daß das Dämpfungsmaximum zwar in etwa gleich bleibt, gute Dämpfungen hier jedoch bei hohen Amplituden und niedrigen Frequenzen auftreten und ein gutes akustisches Verhalten bei niedrigen Amplituden und hohen Frequenzen gewährleistet ist. Dabei nimmt die Dämpfung mit kleiner werdender Amplitude ab. Interessant ist besonders der Verlauf der dynamischen Steifigkeit, da hier nach einem kurzen Anstieg die Steifigkeit stark abfällt und nach dem dargestellten Ausführungsbeispiel bei etwa 180 Hz die gewünschte Entkopplung auftritt, wobei die dynamische Steifigkeit bis unter den konstanten Wert der statischen Steifigkeit abfällt. Durch entsprechende Veränderung der vorstehend beschriebenen Parameter kann dabei in weiten Grenzen eine Entkopplung gezielt bei einer gewünschten Frequenz erreicht werden.

Insgesamt ergibt sich also ein Lager, bei dem hohe Schwingungsamplituden des Motors stark gedämpft werden, wobei das Dämpfungsmaximum auf die Eigenfrequenz des Motors gelegt werden kann und daß bei kleinen Amplituden die hydraulische Dämpfung entkoppelt ist, so daß sich ein optimales akustisches Verhalten ergibt.

## Patentansprüche

1. Zweikammer-Motorlager mit hydraulischer Dämpfung, insbesondere für Kraftfahrzeuge, dessen flüssigkeitsgefüllte und mit gummielastischen Umfangswänden (5, 9) versehene Kammern (1, 2) über eine, mit einer Drosselöffnung (4) versehene Zwischenplatte (3) miteinander verbunden sind und in dessen motorseitiger Kammer (1) durch eine, eine metallische Einlage (12) aufweisende Gummimembran (11) eine weitere, luftgefüllte Membrankammer (10) abgetrennt ist, wobei die Membrankammer nach innen gegen die motorseitige Flüssigkeitskammer (1) durch eine koaxial zu der als eigentliche Tragfeder ausgebildete Umfangswand (5) liegenden Gummimembran (11) und nach außen gegen eine Motorlagerplatte (6) abgeschlossen ist, dadurch gekennzeichnet, daß die Membrankammer (10) zylindrisch ausgebildet und zentral in die Motorlagerplatte (6) eingelassen ist, und daß die Metalleinlage (12) als kreisscheibenförmige Schwungmasse ausgebildet ist, die koaxial in die anschlagslos in der Motorlagerplatte (6) gehalterte Gummimembran (11) eingebettet ist.

2. Zweikammer-Motorlager nach Anspruch 1, dadurch gekennzeichnet, daß die Gummimembran (11) aus einem weichen Gummi mit einer Shore-A-Härte von 25 bis 45, insbesondere 30 bis 38, besteht.

3. Zweikammer-Motorlager nach Anspruch 2, dadurch gekennzeichnet, daß die Gummimembran (11) so ausgebildet ist, daß sie eine progressive Federkonstante aufweist.

4. Zweikammer-Motorlager nach Anspruch 1, dadurch gekennzeichnet, daß der Druck in der gasgefüllten Membrankammer (10) einstellbar ist.

## Claims

1. Two-chamber engine suspension unit with hydraulic damping, particularly for motor vehicles, whose liquid-filled chambers (1, 2) provided with rubber elastic peripheral walls (5, 9), are : connected to one another by means of an intermediate plate (3) provided with a throttle opening (4) and, in the engine-side chamber (1) of which engine suspension unit, a further, air-filled diaphragm chamber (10) is separated by a rubber diaphragm (11) having a metallic insert (12), the diaphragm chamber being enclosed towards the inside against the engine-side fluid chamber (1) by a rubber diaphragm (11) located co-axially with respect to the peripheral wall (5), which is designed as the actual supporting spring, and being enclosed towards the outside against an engine suspension plate (6), characterized in that the diaphragm chamber (10) is of cylindrical design and is recessed centrally into the engine suspension plate (6) and that the metal insert (12) is designed as the disc-shaped inertia mass which is embedded coaxially in the rubber diaphragm (11) held without stops in the engine suspension plate (6).

2. Two-chamber engine suspension unit according to Claim 1, characterized in that the rubber diaphragm (11) consists of a soft rubber with a Shore A hardness of between 25 and 45, in particular between 30 and 38.

3. Two-chamber engine suspension unit according to Claim 2, characterized in that the rubber diaphragm (11) is designed in such a way that it has a progressive spring constant.

4. Two-chamber engine suspension unit according to Claim 1, characterized in that the pressure in the gas-filled diaphragm chamber (10) can be adjusted.

## Revendications

1. Support de moteur à deux chambres et à amortissement hydraulique, notamment pour véhicules automobiles, dont les chambres (1, 2), qui sont remplies par un liquide et comportent des parois périphériques (5, 9) présentant l'élasticité du caoutchouc, sont réunies entre elles par l'intermédiaire d'une plaque intercalaire (3) munie d'une ouverture d'étranglement (4), et dans lequel une autre chambre à membrane (10), remplie d'air, est séparée de' la chambre (1) située du côté du moteur, par une membrane en caoutchouc (11) comportant un insert métallique, la chambre à membrane étant fermée vers l'intérieur, en direction de la chambre (1) située du côté du moteur et remplie par le liquide, par une membrane en caoutchouc (11) disposée coaxialement par rapport à la paroi périphérique (5) réalisée sous la forme d'un ressort de support proprement dit, et fermée vers l'extérieur par une plaque (6) du support du moteur, caractérisé par le fait que la chambre à membrane (10) est cylindrique et est ménagée dans une position centrale dans la plaque (6) du support du moteur, et que l'insert métallique (12) est réalisé sous la forme d'une masse d'inertie en forme de disque circulaire, qui est insérée dans une position coaxiale dans la membrane en caoutchouc (11) maintenue, sans butée, dans la plaque (6) du support du moteur.

2. Support de moteur à deux chambres suivant la revendication 1, caractérisé par le fait que la membrane en caoutchouc (11) est constituée par du caoutchouc mou possédant une dureté Shore A comprise entre 25 et 45 et notamment entre 30 et 38.

3. Support de moteur à deux chambres suivant la revendication 2, caractérisé par le fait que la membrane en caoutchouc (11) est agencée de manière à posséder une constante d'élasticité progressive.

4. Support de moteur à deux chambres suivant la revendication 1, caractérisé par le fait que la pression dans la chambre à membrane (10) remplie par le gaz est réglable.

# FIG. 1

**0 110 197**

FIG. 2

FIG. 3

2

# FIG. 4

GRAD

DÄMPFUNG

— AMPL. 0,1mm
----- AMPL. 1,0mm

FREQUENZ Hz

# FIG. 5

N/mm

DYN. STEIFIGKEIT

FREQUENZ Hz

# FIG. 6

GRAD

Legend:
— AMPL. 0,1mm
--- AMPL. 1,0mm

FREQUENZ    Hz

# FIG. 7

N/mm

DYN. STEIFIGKEIT

FREQUENZ    Hz

0 110 197